# EUROPEAN PATENT SPECIFICATION

(11) **EP 4 570 525 B1**
(45) Date of publication and mention of the grant of the patent: **05.08.2026**
(21) Application number: 24216414.3
(22) Date of filing: 29.11.2024
(51) Int. Cl.: B60C 11/03

(54) **TIRE**
REIFEN
PNEUMATIQUE

(30) Priority: 15.12.2023 JP 2023212336
(43) Date of publication of application: 18.06.2025
(73) Proprietor: Sumitomo Rubber Industries, Ltd., Kobe-shi, Hyogo 651-0072 (JP)
(72) Inventor: SAEKI, Tetsuro, Kobe-shi, 651-0072 (JP); NAGASAWA, Koki, Kobe-shi, 651-0072 (JP)
(74) Representative: Manitz Finsterwald Patent- und Rechtsanwaltspartnerschaft mbB

(56) References cited:
- US-A1- 2017 225 514
- US-A1- 2018 312 009
- US-A1- 2019 054 775
- US-A1- 2019 202 242
- US-B2- 10 363 780

## Description

### Technical field

The present invention relates to a tire.

### Background art

Patent Document 1 below discloses a tire with tread blocks whose shapes are improved for mud performance, wet performance, and steering stability performance on dry road surfaces.

Patent Document 1: Japanese Patent Application Publication No.2018-149978

A tire in accordance with the preamble of claim 1 is known from US 2019/054775 A1. Related tires are described in US 2019/202242 A1, US 2017/225514 A1 and US 2018/312009 A1.

### Summary of the Invention

### Problems to be solved by the Invention

With the tightening of regulations on vehicle running noise in recent years, improvements in noise performance are required even for tires designed to be stability used on muddy terrain, such as the tires mentioned above.

The present invention was made in view of the above circumstances, and a primary objective of the present invention is to provide a tire improved in noise performance while maintaining excellent mud performance.

### Means for solving the Problems

According to the present invention, a tire comprises:
a tread portion having a first tread edge and a second tread edge, and provided with four circumferential grooves disposed between the first and second tread edges and extending continuously in a tire circumferential direction so that the tread portion is axially divided into five land portions,
wherein
the four circumferential grooves are a first shoulder circumferential groove closest to the first tread edge, a second shoulder circumferential groove closest to the second tread edge, a first crown circumferential groove between the first shoulder circumferential groove and a tire equator, and a second crown circumferential groove between the second shoulder circumferential groove and the tire equator,
the five land portions include a first middle land portion between the first shoulder circumferential groove and the first crown circumferential groove, a second middle land portion between the second shoulder circumferential groove and the second crown circumferential groove, and a crown land portion between the first crown circumferential groove and the second crown circumferential groove,
the first middle land portion is provided with first middle lateral grooves extending across an entire axial width thereof,
the second middle land portion is provided with second middle lateral grooves extending across an entire axial width thereof,
each of the first middle lateral grooves and the second middle lateral grooves is inclined with respect to the tire axial direction so as to have a first end on a first side in the tire circumferential direction and a second end on a second side in the tire circumferential direction,
in a plan view of the tread portion, the first ends of the first middle lateral grooves respectively overlap first virtual zones formed by extending the second ends of the second middle lateral groove to the first middle land portion in parallel with the tire axial direction, and
the second ends of the first middle lateral grooves respectively overlap second virtual zones formed by extending the first ends of the second middle lateral grooves to the first middle land portion in parallel with the tire axial direction. The crown land portion is provided with a plurality of first crown lateral grooves connected to the first crown circumferential groove. In a plan view of the tread portion, third virtual zones formed by extending the first crown lateral grooves to the first middle land portion in parallel with the tire axial direction do not overlap with the first virtual zones and the second virtual zones.

Here, the "virtual zone" is, in other words, the trace left when the circumferential width of the groove end is moved parallel to the tire axis direction.

### Effects of the Invention

By having the above configuration, the tire of the present invention can be improved in noise performance while maintaining mud performance.

### Brief description of the Drawings

FIG. 1 is a developed partial view of a tread portion of a tire as an embodiment of the present invention.
FIG. 2 is a developed partial view of the tread portion showing the crown land portion, first middle land portion, and second middle land portion in FIG. 1.
FIG. 3 is a developed partial view of the tread portion showing the first middle land portion and the second middle land portion in FIG. 2.
FIG. 4 is an enlarged partial view showing the first crown circumferential groove.
FIG. 5 is an enlarged partial view showing the first shoulder land portion in FIG. 1.

### Detailed description of the Invention

An embodiment of the present invention will now be described in detail in conjunction with accompanying drawings.

It is to be noted that, in order to aid understanding of the present invention, the drawings may include expressions exaggerated or different from the actual dimensional ratio of the structure.

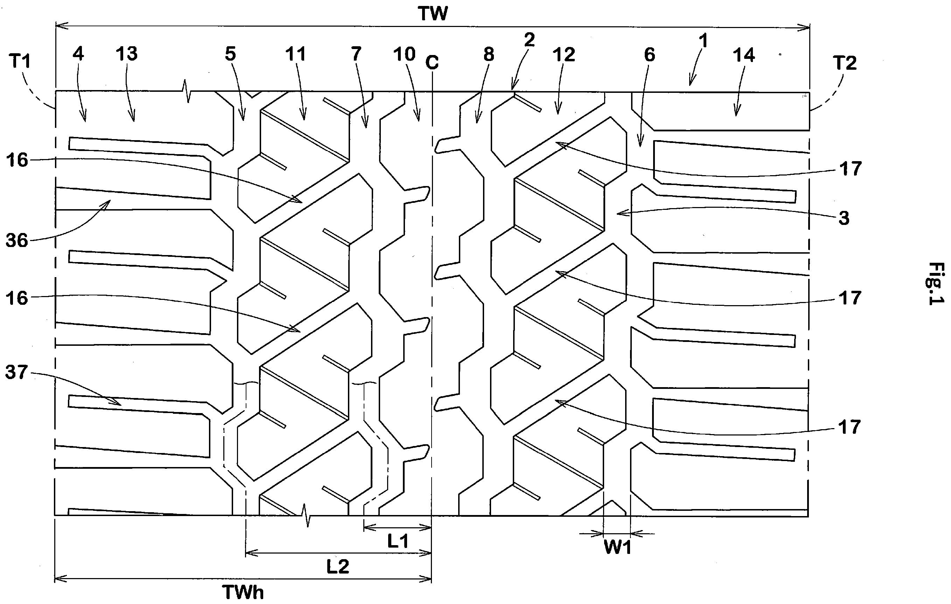

FIG. 1 is a developed partial view of a tread portion 2 of a tire 1 as an embodiment of the present invention.

In the present embodiment, the tire 1 is a pneumatic tire designed to be suitable for use in four-wheel drive vehicles such as SUVs so as to run not only on paved roads but also off-road such as muddy terrains and rocky terrain.
However, application of the present invention is not limited to tires such as in the present embodiment.

The tread portion 2 has a pair of tread edges: a first tread edge T1 and a second tread edge T2.
In the present embodiment, as shown in FIG. 1, the tread portion 2 is provided with four circumferential grooves 3 continuously extending in the tire circumferential direction, and thereby, the tread portion 2 is axially divided into five land portions 4.

In the present invention, the tread edges T1 and T2 are the axial outermost edges of the ground contacting patch of the tire which occurs when the tire under its normal state is contacted with a flat horizontal surface at a camber angle of 0 degrees and is loaded with 58% of the normal tire load for the tire.

When the tire 1 is a pneumatic tire for which various standards have been established, the normal state of the tire 1 is such that the tire is mounted on a normal rim, and inflated to a normal pressure, but loaded with no tire load.

When the tire 1 is a pneumatic tire or non-pneumatic tire for which various standards are not yet established, the normal state of the tire 1 is such that the tire is put under a standard usage condition according to the purpose of use of the tire, but not yet attached to the vehicle and loaded with no tire load.

In this application including specification and claims, various dimensions, positions and the like of the tire refer to those under the normal state unless otherwise noted.

The above-mentioned normal rim is a wheel rim officially approved or recommended for the tire by the standardization organization on which the tire is based, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The above-mentioned normal pressure is the maximum air pressure officially approved or recommended for the tire by the standardization organization on which the tire is based, for example, the "maximum air pressure" in JATMA, the maximum pressure given in the "Tire Load Limits at Various Cold Inflation Pressures" table in TRA, the "Inflation Pressure" in ETRTO, or the like.

When the tire 1 is a pneumatic tire for which various standards have been established, the normal tire load is the maximum tire load officially approved or recommended for the tire by the same standardization organization and specified in the Air-pressure/Maximum-load Table or similar list, for example, the "maximum air pressure" in JATMA, the "Inflation Pressure" in ETRTO, the maximum pressure given in the "Tire Load Limits at Various Cold Inflation Pressures" table in TRA or the like.

When the tire 1 is a pneumatic tire or non-pneumatic tire for which various standards are not yet established, the normal tire load is the maximum tire load recommended for the tire by the tire manufacturer.

The four circumferential grooves 3 are a first shoulder circumferential groove 5, a second shoulder circumferential groove 6, a first crown circumferential groove 7, and a second crown circumferential groove 8.

Among the four circumferential grooves 3, the first shoulder circumferential groove 5 is located closest to the first tread edge T1, and the second shoulder circumferential groove 6 is located closest to the second tread edge T2.
The first crown circumferential groove 7 is located between the first shoulder circumferential groove 5 and the tire equator C.
The second crown circumferential groove 8 is located between the second shoulder circumferential groove 6 and the tire equator C.

It is preferable that the groove widths W1 of the circumferential grooves 3 are at least 3 mm.
Preferably, the groove widths W1 are not less than 3.0% and not more than 7.0% of the tread width TW.

Here, the tread width TW corresponds to the distance in the tire axial direction from the first tread edge T1 to the second tread edge T2 in the normal state.

The depths of the circumferential grooves 3 are preferably 5 to 10 mm in the case that the tire 1 is of a passenger car tire size.

Note that when numerical ranges for various parameters are described in this specification, unless otherwise specified, the numerical ranges mean the numerical ranges for the average values of the parameters.

The five land portions 4 are:
a crown land portion 10 between a first crown circumferential groove 7 and a second crown circumferential groove 8;
a first middle land portion 11 between the first shoulder circumferential groove 5 and the first crown circumferential groove 7;
a second middle land portion 12 between the second shoulder circumferential groove 6 and the second crown circumferential groove 8;
a first shoulder land portion 13 between the first shoulder circumferential groove 5 and the first tread edge T1; and
a second shoulder land portion 14 between the second shoulder circumferential groove 6 and the second tread edge T2.
In the present embodiment, the crown land portion 10 is located on the tire equator C.

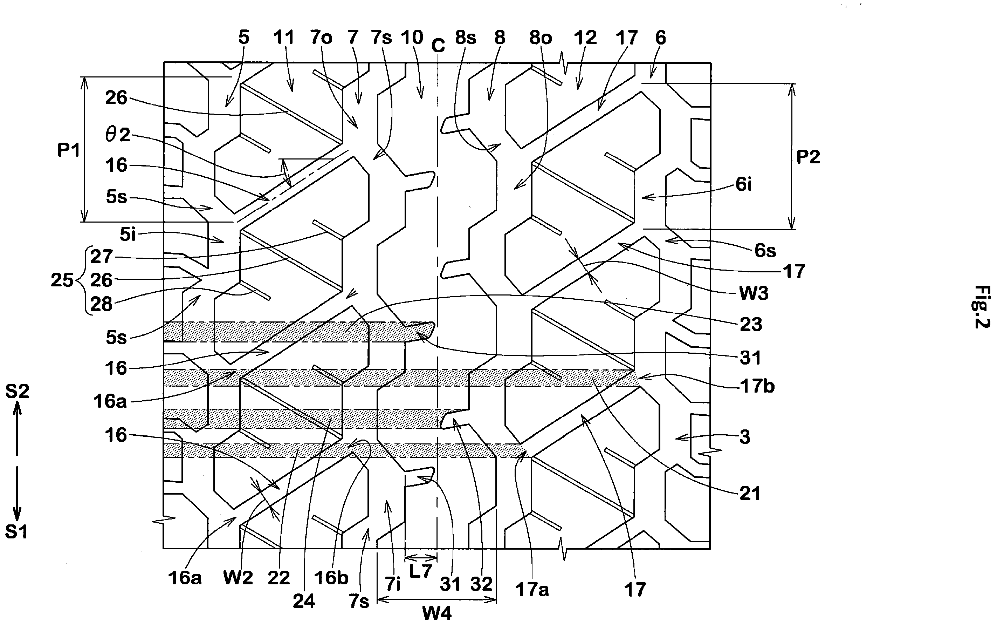

FIG. 2 shows the crown land portion 10, the first middle land portion 11, and the second middle land portion 12.

As shown, the first middle land portion 11 is provided with a plurality of first middle lateral grooves 16.
The first middle lateral grooves 16 each extend across the entire axial width of the first middle land portion 11.

Further, the second middle land portion 12 is provided with a plurality of second middle lateral grooves 17.
The second middle lateral grooves 17 each extend across the entire axial width of the second middle land portion 12.

The first middle lateral grooves 16 and the second middle lateral grooves 17 are each inclined with respect to the tire axial direction.

In the present embodiment, the first middle lateral grooves 16 and the second middle lateral grooves 17 are inclined in a same direction with respect to the tire axial direction.
However, it is also possible that the first middle lateral grooves 16 are inclined in one direction with respect to the tire axial direction, and the second middle lateral grooves 17 are inclined in one direction with respect to the tire axial direction which is different from the first middle lateral grooves 16.

Since the first middle lateral grooves 16 and the second middle lateral grooves 17 are inclined as described above, each of these grooves 16 and 17 has its first end and second end respectively located on one side (first side S1) and the other side (second side S2) in the tire circumferential direction. In the figures, the first side S1 is in the downward direction, and the second side S2 is in the upward direction.

More specifically, each first middle lateral groove 16 has a first end 16a on the first side S1 and a second end 16b on the second side S2 in the tire circumferential direction, and each second middle lateral groove 17 has a first end 17a on the first side S1 and a second end 17b on the second side S2 in the tire circumferential direction.

These ends are opened to the adjacent circumferential grooves 3.

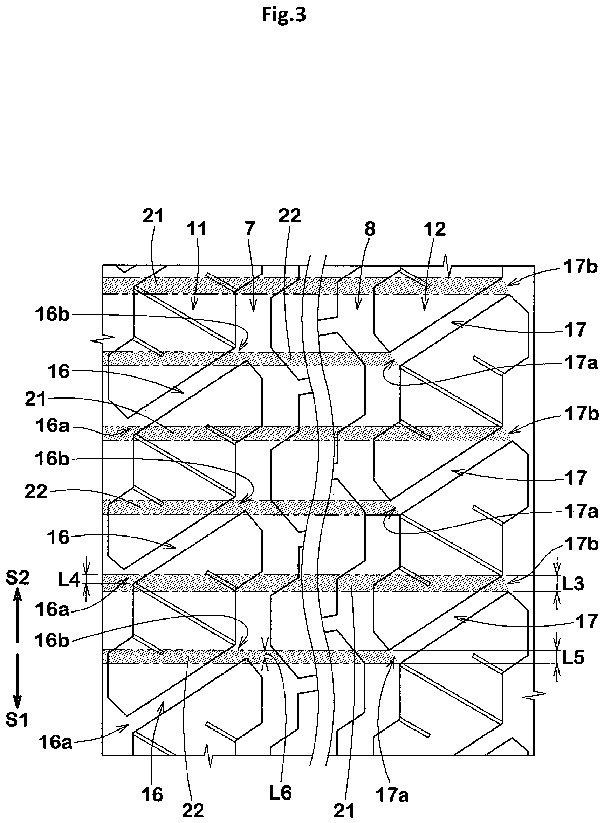

FIG.3 shows the first middle land portion 11 and the second middle land portion 12, omitting the crown portion land 10.

As shown in FIG. 3, in the plan view of the tread portion 2,
the first end 16a of each first middle lateral groove 16 overlaps with a first virtual zone 21 formed by extending the second end 17b of one of the second middle lateral grooves 17 to the first middle land portion 11 in parallel with the tire axial direction, and the second end 16b of each first middle lateral grooves 16 overlaps with a second virtual zone 22 formed by extending the first end 17a of one of the second middle lateral grooves 17 to the first middle land portion 11 in parallel with the tire axial direction.
By having such positional relationship, the tire 1 according to the present invention can be improved in noise performance while maintaining mud performance.
The reason is as follows.

As described above, in the tire 1 of the present invention, the tread portion 2 is provided with four circumferential grooves 3. Further, the first middle land portion 11 is provided with the first middle lateral grooves 16, and the second middle land portion 12 is provided with the second middle lateral grooves 17.
Such various grooves provide reaction forces in multiple directions when running on mud terrain, and help to maintain mud performance.

On the other hand, so-called pitch sound has been known as a noise generated from a tire when running.
One of the causes of such pitch sound is impact force generated when lateral grooves extending in the tire axial direction contact a road surface.
Such impact force causes the tread portion and sidewall portions (not shown) to vibrate periodically which may generate pitch sound.

In the present invention, since the first middle lateral grooves 16 and the second middle lateral grooves 17 are arranged as described above,
it becomes possible for the first middle lateral grooves 16 and the second middle lateral grooves 17 to alternately and thereby continuously contact with the ground when running, and as a result, the pulsation of the impact force described above can be reduced.
In the tire 1 of the present invention, therefore, pitch noise caused by impact force can be reduced, and the noise performance can be improved.

Hereinafter, a more detailed configuration of the tire 1 according to the present embodiment will be described. Each of the configurations described below is a specific form of the present embodiment. It goes without saying, therefore, that the present invention can achieve the effects described above even if it does not have the configurations described below. Even if any one of the configurations described below is applied alone to the tire 1 of the present invention, which is equipped with the features described above, an improvement in performance according to each of the configurations can be expected. Furthermore, when some of the configurations described below are applied in combination, a combined improvement in performance according to each configuration can be expected.

In the present embodiment, the tread portion 2 is provided with a tread pattern which is substantially point symmetrical with respect to a point on the tire equator C as shown in FIG. 1. Here, the expression "substantially" means that the tread pattern is not strictly point symmetric when a so-called pitch variation technique is employed. Accordingly, below descriptions for components (such as grooves, sipes and ground contacting elements) located on the first tread edge T1 side of the tire equator C, can be applied to corresponding components located on the second tread edge T2 side of the tire equator C mutatis mutandis.

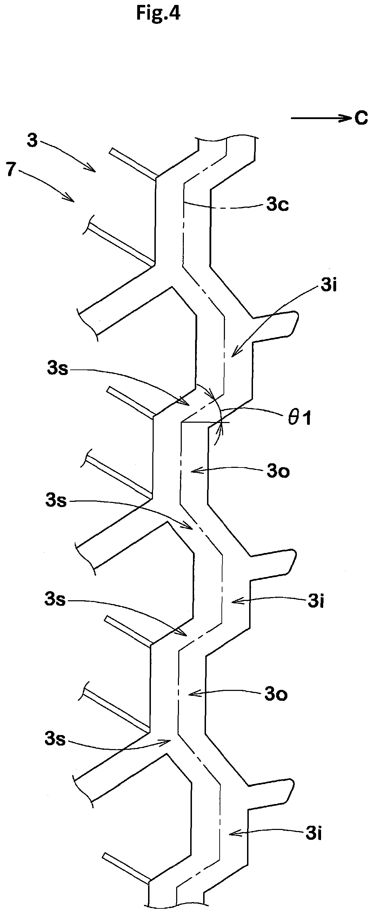

Taking the first crown circumferential groove 7 shown in FIG. 4 as an example of the circumferential grooves 3, the configuration of the circumferential groove 3 will be described below. The description below can be applied to not only the first crown circumferential groove 7, but also the second crown circumferential groove 8, the first shoulder circumferential groove 5 and the second shoulder circumferential groove 6.

The circumferential groove 3 extends in a zigzag shape. But, the circumferential groove 3 may be extended linearly in parallel with the tire circumferential direction.

When the circumferential groove 3 extends in a zigzag shape as in the present embodiment, the circumferential groove 3 may take various forms such that the center line 3c of the groove is in a triangular waveform, a sine waveform, a trapezoidal waveform or the like.
In the present embodiment, the center line 3c of the circumferential groove 3 is formed in a trapezoidal waveform.
This can improve not only mud performance but also running performance on rocky terrain with relatively large rocks.

The circumferential groove 3 comprises axially inner groove segments 3i, axially outer groove segments 3o, and oblique groove segments 3s.

The axially inner groove segments 3i each extend linearly in the tire circumferential direction on the tire equator C side.

The axially outer groove segments 3o each extends linearly in the tire circumferential direction on the axially outer side of the axially inner groove segments 3i.

The oblique groove segments 3s connects between the axially inner groove segments 3i and the axially outer groove segments 3o.

The angle θ1 of each oblique groove segment 3s is, for example, 40 to 60 degrees with respect to the tire axial direction.

The axially inner groove segments 3i and the axially outer groove segments 3o in the present embodiment each extend in parallel with the tire circumferential direction, but are not to be limited to such an arrangement.

As shown in FIG. 1, the distance L1 in the tire axial direction from the tire equator C to the center line of the first crown circumferential groove 7 is 5% to 20% of a half tread width TWh. The half tread width TWh is a half of the tread width TW between the first and second tread edges T1 and T2, corresponding to the distance in the tire axial direction from the tire equator C to the first tread edge T1 or second tread edge T2.

In the present embodiment, as the first shoulder circumferential groove 5 extends in a zigzag shape, its center line extends in the tire circumferential direction while oscillating in the tire axial direction within the above-mentioned range.

Similarly, the distance in the tire axial direction from the tire equator C to the center line of the second crown circumferential groove 8 is 5% to 20% of the half tread width TWh.

The distance L2 in the tire axial direction from the tire equator C to the center line of the first shoulder circumferential groove 5 is 45% to 55% of the half tread width TWh.

The distance in the tire axial direction from the tire equator C to the center line of the second shoulder circumferential groove 6 is 45% to 55% of the half tread width TWh.

By arranging the circumferential grooves 3 in this manner, it is possible to improve mud performance while suppressing chipping-off of the land portions.

As shown in FIG. 2, the first middle lateral grooves 16 and the second middle lateral grooves 17 are inclined in a first direction with respect to the tire axis direction (upward slope to the right in the figures of the present embodiment).
In the present embodiment, the first middle lateral groove 16 and the second middle lateral groove 17 extend linearly with the above-mentioned slope, but they are not limited to such arrangement.

Further, the first middle lateral grooves 16 and the second middle lateral grooves 17 are each inclined at an angle θ2 of from 20 to 60 degrees with respect to the tire axial direction.
The angle θ2 is preferably not less than 30 degrees, more preferably not less than 35 degrees, but preferably not more than 50 degrees, more preferably not more than 45 degrees.
These first middle lateral grooves 16 and second middle lateral grooves 17 can easily discharge mud and soil entered in the grooves when the vehicle is running on muddy terrain. Therefore, excellent mud performance can be continuously exhibited.

The first middle lateral groove 16 has a groove width W2 which is constant in its longitudinal direction.

The groove width W2 of the first middle lateral groove 16 is 5% to 20%, preferably 10% to 15% of the average value of pitch lengths P1 of the first middle lateral grooves 16 in the tire circumferential direction.
Similarly, the groove width W3 of the second middle lateral groove 17 is 5% to 20%, preferably 10% to 15% of the average value of pitch lengths P2 of the second middle lateral grooves 17 in the tire circumferential direction.
Thereby, mud performance and steering stability on dry roads (hereinafter simply referred to as "steering stability") can be improved in a well-balanced manner.

As shown in FIG. 3, even if at least a portion of the first end 16a of the first middle lateral groove 16 overlaps with the first virtual zone 21, the above-described effects can be expected.
From the viewpoint of further enhancing the above-mentioned effects, the overlapping length L4 in the tire circumferential direction of the first end 16a of the first middle lateral groove 16 with the first virtual zone 21 is preferably 30% to 100%, more preferably 60% to 100% of the length L3 in the tire circumferential direction of the first virtual zone 21. Similarly, the overlapping length L6 in the tire circumferential direction of the second end 16b of the first middle lateral groove 16 with the second virtual zone 22 is preferably 30% to 100%, more preferably 60% to 100% of the length L5 in the tire circumferential direction of the second virtual zone 22.

As shown in FIG. 2, each of the first middle lateral grooves 16 is connected to one of connection positions between the axially outer groove segments 7o and the oblique groove segments 7s of the first crown circumferential groove 7 so that the angle between the first middle lateral groove 16 and the axially outer groove segment 7o is an obtuse angle.
As a result, when running on muddy terrain, mud and soil can be strongly compacted in the connection positions of these grooves, and the mud performance can be further improved.

From the same point of view, each of the first middle lateral grooves 16 is connected to one of connection positions between the axially inner groove segments 5i and the oblique groove segments 5s of the first shoulder circumferential groove 5 so that the angle between the first middle lateral groove 16 and the axially inner groove segment 5i is an obtuse angle.

Further, each of the second middle lateral grooves 17 is connected to one of connection positions between the axially outer groove segments 8o and the oblique groove segments 8s of the second crown circumferential groove 8 so that the angle between the second middle lateral groove 17 and the axially outer groove segment 8o is an obtuse angle.

Similarly, each of the second middle lateral grooves 17 is connected to one of connection positions between the axially inner groove segments 6i and the oblique groove segments 6s of the second shoulder circumferential groove 6 so that the angle between the second middle lateral groove 17 and the axially inner groove segment 6i is an obtuse angle. Thereby, the mud performance can be further improved.

The first middle land portion 11 is provided with sipes 25.

The term "sipe" means a very narrow groove or cut whose main portion has a width of 1.5 mm or less between its two opposite sipe walls.
Here, the main portion means a portion where the two opposite sipe walls extend substantially parallel to each other in the tire radial direction.
The expression "substantially parallel" means that the angle formed between the two opposite sipe walls is 10 degrees or less.

Thereby, when ground pressure is applied to a tread rubber portion where the sipe is formed, the two sipe walls in the sipe main portion come into contact with each other, and the apparent rigidity of the tread rubber portion can be maintained.

In contrast, a groove in the general sense, namely, for drainage purpose means a groove whose two opposite walls do not come into contact with each other even when ground pressure is applied, to maintain a substantial drainage path. Therefore, the width of the groove is at least 2.0 mm.

In the present embodiment, the sipes 25 extend in the tire radial direction with a constant width.
However, the sipe 25 may have a chamfered portion formed on its edge(s) where the width is increased toward the radially outside.
Further, the sipe 25 may be provided with a so-called flask bottom in which the width is increased at the bottom.

The sipes 25 provided in the first middle land portion 11 in this example include a center sipe 26, an inner sipe 27, and an outer sipe 28.
The sipes 25 are inclined, for example, in a second direction with respect to the tire axial direction (downward sloe to the right in the figures of the present embodiment).
Thereby, the sipes 25 are inclined in an opposite direction to the first middle lateral groove 16 with respect to the tire axial direction.
The angles of the sipes 25 are, for example, 20 to 40 degrees with respect to the tire axial direction.

The center sipe 26 extends from the first crown circumferential groove 7 to the first shoulder circumferential groove 5.
Preferably, the center sipe 26 extends from the connection position between the first middle lateral groove 16 and the first crown circumferential groove 7 to the connection position between the first middle lateral groove 16 and the first shoulder circumferential groove 5.
Such center sipe 26 provides a large frictional force on muddy or rocky terrain, and is useful for improving off-road performance.

The inner sipe 27 extends from the first crown circumferential groove 7 and ends within the first middle land portion 11 without communicating with other grooves and sipes, for example.
The inner sipe 27 is connected to the connection position between the axially outer groove segment 7o and the oblique groove segment 7s of the first crown circumferential groove 7. In the present embodiment, the inner sipe 27 has an angular difference of 5 degrees or less from the center sipe 26. The angular difference is preferably zero, that is, these sipes are parallel with each other.
Further, the length of the inner sipe 27 is 50% or less, preferably 20% to 40% of the length of the center sipe 26. Such inner sipe 27 helps to improve the mud performance and steering stability in a well-balanced manner.

The outer sipe 28 extends from the first shoulder circumferential groove 5 and ends within the first middle land portion 11 without communicating with other grooves and sipes.
The outer sipe 28 is connected to the connection position between the axially inner groove segment 5i and the oblique groove segment 5s of the first shoulder circumferential groove 5.
In the present embodiment, the outer sipe 28 has an angular difference of 5 degrees or less from the center sipes 26. The angular difference is preferably zero, that is, these sipes are parallel with each other.
Further, the length of the outer sipe 28 is 50% or less, preferably 20% to 40% of the length of the center sipe 26.

The second middle land portion 12 is provided with sipes similar to the first middle land portion 11.
The sipes of the second middle land portion 12 have the same configurations as the sipes 25 provided in the first middle land portion 11, therefore, the above description for the sipes 25 of the first middle land portion 11 can also be applied to the sipes of the second middle land portion 12 mutatis mutandis, so the description will be omitted.

The crown land portion 10 is provided with a plurality of first crown lateral grooves 31 and a plurality of second crown lateral grooves 32.

The first crown lateral grooves 31 are connected to the first crown circumferential groove 7 at positions in the tire circumferential direction different from the positions at which the first middle lateral grooves 16 are connected to the first crown circumferential groove 7.
As a result, in the present embodiment, a T-junction formed by the first middle lateral groove 16 and the first crown circumferential groove 7 and a T-junction formed by the first crown lateral groove 31 and the first crown circumferential groove 7 are arranged alternately in the tire circumferential direction.

The second crown lateral grooves 32 are connected to the second crown circumferential groove 8 in the same way as the first crown lateral grooves 31 as described above.

In the present embodiment, the first crown lateral grooves 31 end within the crown land portion 10.
The length L7 in the tire axial direction of the first crown lateral groove 31 is 15% to 30% of the maximum width W4 in the tire axial direction of the crown land portion 10.
The angle of the first crown lateral groove 31 with respect to the tire axial direction is, for example, 10 degrees or less.

The second crown lateral grooves 32 are the same configuration as the first crown lateral grooves 31 as the tread pattern is point symmetrical.

In the developed view of the tread portion 2, as shown in FIG. 2, third virtual zones 23 which are formed by extending the first crown lateral grooves 31 in parallel with the tire axial direction to the first middle land portion 11 do not overlap with the first virtual zones 21 and the second virtual zones 22.
Further, in the developed view of the tread portion 2, the fourth virtual zones 24 which are formed by extending the second crown lateral grooves 32 in parallel with the tire axial direction to the first middle land portion 11 do not overlap with the first virtual zones 21 and the second virtual zones 22.
Such arrangement of the lateral grooves can improve wear resistance of the first middle land portion 11 and the crown land portion 10.

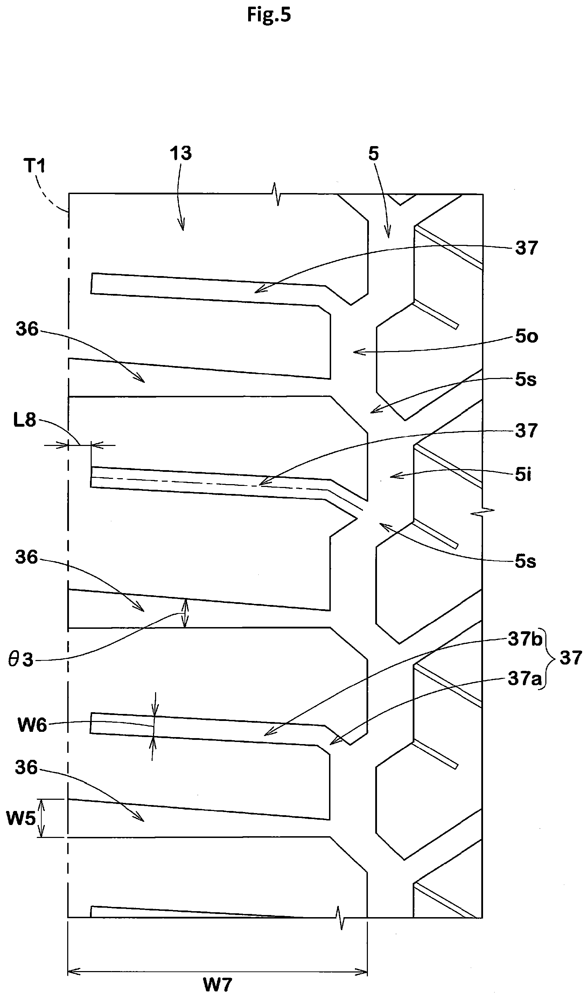

FIG. 5 is an enlarged partial view showing the first shoulder land portion 13. As shown, the first shoulder land portion 13 is provided with a plurality of transverse shoulder lateral grooves 36 and a plurality of non-transverse shoulder lateral grooves 37. In the present embodiment, these lateral grooves 36 and 37 are arranged alternately in the tire circumferential direction.

The transverse shoulder lateral groove 36 extends from the first shoulder circumferential groove 5 to the first tread edge T1.
The non-transverse shoulder lateral groove 37 extends axially outward from the first shoulder circumferential groove 5, and ends on the axially inside of the first tread edge T1.

The transverse shoulder lateral groove 36 is connected to a connection position between the axially outer groove segment 5o and the oblique groove segment 5s of the first shoulder circumferential groove 5.
In this example, the transverse shoulder lateral groove 36 has a groove width continuously increasing toward the first tread edge T1, and
the angle θ3 formed between two groove edges of the transverse shoulder lateral groove 36 is 3 to 8 degrees for example.
Such transverse shoulder lateral groove 36 can quickly discharge mud that has gotten into the groove when running on muddy terrain, and helps to continuously exhibit excellent mud performance.

The transverse shoulder lateral groove 36 in this example is arranged at a smaller angle with respect to the tire axial direction than the angle θ2 of the first middle lateral groove 16.
The angle of the transverse shoulder lateral groove 36 is, for example, 5 degrees or less with respect to the tire axial direction.
Such transverse shoulder lateral grooves 36 is useful for improving traction performance of the tire on muddy terrain.

The non-transverse shoulder lateral groove 37 is connected to a connection position between the axially inner groove segment 5i and the oblique groove segment 5s of the first shoulder circumferential groove 5.

The non-transverse shoulder lateral groove 37 in this example is composed of a short groove segment 37a extending axially outward from the first shoulder circumferential groove 5, and a major groove segment 37b extending axially outward from the axially outer end of the short groove segment 37a.
The short groove segment 37a is inclined with respect to the tire axial direction to the second side S2.
The major groove segment 37b is inclined with respect to the tire axial direction to the second side S2 at a smaller angle than the short groove segment 37a.
The angle of the major groove segment 37b is, for example, 5 degrees or less with respect to the tire axial direction.

The non-transverse shoulder lateral groove 37 has a constant groove width W6 along its longitudinal direction.
The groove width W6 of the non-transverse shoulder lateral groove 37 is in a range from 40% to 60% of the groove width W5 of the transverse shoulder lateral groove 36 measured at the first tread edge T1.
Such non-transverse shoulder lateral groove 37 helps to improve the mud performance and steering stability in a well-balanced manner.

The distance L8 in the tire axial direction from the axially outer end of the non-transverse shoulder lateral groove 37 to the first tread edge T1 is 15% or less, for example, 5% to 10% of the maximum width W7 in the tire axial direction of the first shoulder land portion 13.
Such non-transverse shoulder lateral grooves 37 can suppress uneven wear and chipping-off of tread rubber around the first tread edge T1.

As shown in FIG. 1, the second shoulder land portion 14 has substantially the same configuration as the first shoulder land portion 13 described above since the tread pattern is point symmetrical. Therefore, the description of the first shoulder land portion 13 can be applied to the second shoulder land portion 14 mutatis mutandis, so the description will be omitted.

From the viewpoint of fully demonstrating mud performance, the land ratio of the tread portion 2 in the present embodiment is 60% to 80%, preferably 65% to 75%.

Here, the "land ratio" of a tread element means the ratio of the actual ground contacting area of the tread element to the overall area (inclusive of grooves and sipes) of the tread element.

The land ratio of the crown land portion 10 is, for example, 80% to 95%, preferably 90% to 95%.
The land ratios of the first middle land portion 11 and the second middle land portion 12 are, for example, 75% to 95%, preferably 80% to 90%.
The land ratios of the first shoulder land portion 13 and the second shoulder land portion 14 are, for example, 70% to 90%, preferably 75% to 85%.
Thereby, the mud performance and steering stability are improved in a well-balanced manner.

While detailed description has been made of a preferable embodiment of the present invention, the present invention can be embodied in various forms within the scope of the appended claims.

### Description of the reference signs

2 tread portion
3 circumferential groove
4 land portion
5 first shoulder circumferential groove
6 second shoulder circumferential groove
7 first crown circumferential groove
8 second crown circumferential groove
10 crown land portion
11 first middle land portion
12 second middle land portion
16 first middle lateral groove
17 second middle lateral groove
21 first virtual zone
22 second virtual zone
T1 first tread edge
T2 second tread edge

## Claims

1. A tire (1) comprising:
a tread portion (2) having a first tread edge (T1) and a second tread edge (T2), and provided with four circumferential grooves (3) disposed between the first and second tread edges and extending continuously in a tire circumferential direction so that the tread portion (2) is axially divided into five land portions (4),
wherein
the four circumferential grooves (3) are
a first shoulder circumferential groove (5) closest to the first tread edge (T1),
a second shoulder circumferential groove (6) closest to the second tread edge (T2),
a first crown circumferential groove (7) between the first shoulder circumferential groove (5) and a tire equator (C), and
a second crown circumferential groove (8) between the second shoulder circumferential groove (6) and the tire equator (C),
the five land portions (4) include
a first middle land portion (11) between the first shoulder circumferential groove (5) and the first crown circumferential groove (7),
a second middle land portion (12) between the second shoulder circumferential groove (6) and the second crown circumferential groove (8), and
a crown land portion (10) between the first crown circumferential groove (7) and the second crown circumferential groove (8),
the first middle land portion (11) is provided with first middle lateral grooves (16) extending across an entire axial width thereof,
the second middle land portion (12) is provided with second middle lateral grooves (17) extending across an entire axial width thereof, and
each of the first middle lateral grooves (16) and the second middle lateral grooves (17) is inclined with respect to the tire axial direction so as to have a first end (16a, 17a) on a first side (S1) in the tire circumferential direction and a second end (16b, 17b) on a second side (S2) in the tire circumferential direction,
**characterized in that**
in a plan view of the tread portion (2), the first ends (16a) of the first middle lateral grooves (16) respectively overlap first virtual zones (21) formed by extending the second ends (17b) of the second middle lateral groove (17) to the first middle land portion (11) in parallel with the tire axial direction, and the second ends (16b) of the first middle lateral grooves (16) respectively overlap second virtual zones (22) formed by extending the first ends (17a) of the second middle lateral grooves (17) to the first middle land portion (11) in parallel with the tire axial direction,
the crown land portion (10) is provided with a plurality of first crown lateral grooves (31) connected to the first crown circumferential groove (7), and
in a plan view of the tread portion (2), third virtual zones (23) formed by extending the first crown lateral grooves (31) to the first middle land portion (11) in parallel with the tire axial direction do not overlap with the first virtual zones (21) and the second virtual zones (22).

2. The tire (1) according to claim 1, wherein
the first middle lateral grooves (16) and the second middle lateral grooves (17) are each inclined at an angle (θ2) of from 20 to 60 degrees with respect to the tire axial direction.

3. The tire (1) according to claim 1 or 2, wherein
the overlapping length (L4) in the tire circumferential direction of the first end (16a) of the first middle lateral groove (16) with the first virtual zone (21) is 30% to 100% of the length (L3) in the tire circumferential direction of the first virtual zone (21).

4. The tire (1) according to claim 1, 2 or 3, wherein
the overlapping length (L6) in the tire circumferential direction of the second end (16b) of the first middle lateral groove (16) with the second virtual zone (22) is 30% to 100% of the length (L5) in the tire circumferential direction of the second virtual zone (22).

5. The tire (1) according to any one of claims 1 to 4, wherein
a distance (L1) in the tire axial direction from the tire equator (C) to the center line of the first crown circumferential groove (7) is 5% to 20% of a half tread width (TWh) which is the distance in the tire axial direction from the tire equator (C) to the first tread edge (T1).

6. The tire (1) according to any one of claims 1 to 5, wherein
a distance in the tire axial direction from the tire equator (C) to the center line of the second crown circumferential groove (8) is 5% to 20% of a half tread width (TWh) which is the distance in the tire axial direction from the tire equator (C) to the first tread edge (T1).

7. The tire (1) according to any one of claims 1 to 6, wherein
the groove width (W2) of the first middle lateral groove (16) is 5% to 20% of an average value of pitch lengths (P1) in the tire circumferential direction of the first middle lateral grooves (16).

8. The tire (1) according to any one of claims 1 to 7, wherein
the groove width (W3) of the second middle lateral groove (17) is 5% to 20% of an average value of pitch lengths (P2) in the tire circumferential direction of the second middle lateral grooves (17).

9. The tire (1) according to any one of claims 1 to 8, wherein
a land ratio of the crown land portion (10) is 80% to 95%.

10. The tire (1) according to any one of claims 1 to 9, wherein
the first crown circumferential groove (7) and the second crown circumferential groove (8) each extend in a zigzag shape in the tire circumferential direction.

11. The tire (1) according to claim 10, wherein
the first crown circumferential groove (7) has a zigzag shape and comprises:
axially inner groove segments extending linearly in the tire circumferential direction;
axially outer groove segments (7o) extending linearly in the tire circumferential direction; and
oblique groove segments (7s) connecting between the axially inner groove segments and the axially outer groove segments (7o), and
each of the first middle lateral grooves (16) is connected to one of connection positions between the axially outer groove segments (7o) and the oblique groove segments (7s) of the first crown circumferential groove (7) so that an angle formed between the first middle lateral groove (16) and the axially outer groove segment (7o) is an obtuse angle.

12. The tire (1) according to claim 10 or 11, wherein
the second crown circumferential groove (8) has a zigzag shape and comprises:
axially inner groove segments extending linearly in the tire circumferential direction;
axially outer groove segments (8o) extending linearly in the tire circumferential direction; and
oblique groove segments (8s) connecting between the axially inner groove segments and the axially outer groove segments (8o), and
each of the second middle lateral grooves (17) is connected to one of connection portions between the axially outer groove segments (8o) and the oblique groove segments (8s) of the second crown circumferential groove (8) so that an angle formed between the second middle lateral groove (17) and the axially outer groove segment (8o) is an obtuse angle.

13. The tire (1) according to any one of claims 1 to 12, wherein
the crown land portion (10) is provided with a plurality of second crown lateral grooves (32) connected to the second crown circumferential groove (8), and
in a plan view of the tread portion (2), fourth virtual zones (24) formed by extending the second crown lateral grooves (32) to the first middle land portion (11) in parallel with the tire axial direction do not overlap with the first virtual zones (21) and the second virtual zones (22).

## Patentansprüche

1. Reifen (1), umfassend:
einen Laufflächenabschnitt (2), der eine erste Laufflächenkante (T1) und eine zweite Laufflächenkante (T2) aufweist und mit vier Umfangsrillen (3) versehen ist, die zwischen der ersten und der zweiten Laufflächenkante angeordnet sind und sich kontinuierlich in einer Reifenumfangsrichtung erstrecken, so dass der Laufflächenabschnitt (2) axial in fünf Landabschnitte (4) unterteilt ist,
wobei
die vier Umfangsrillen (3)
eine erste Schulterumfangsrille (5), die der ersten Laufflächenkante (T1) am nächsten liegt,
eine zweite Schulterumfangsrille (6), die der zweiten Laufflächenkante (T2) am nächsten liegt,
eine erste Kronenumfangsrille (7) zwischen der ersten Schulterumfangsrille (5) und einem Reifenäquator (C) und
eine zweite Kronenumfangsrille (8) zwischen der zweiten Schulterumfangsrille (6) und dem Reifenäquator (C) sind,
die fünf Landabschnitte (4)
einen ersten mittleren Landabschnitt (11) zwischen der ersten Schulterumfangsrille (5) und der ersten Kronenumfangsrille (7),
einen zweiten mittleren Landabschnitt (12) zwischen der zweiten Schulterumfangsrille (6) und der zweiten Kronenumfangsrille (8) und
einen Kronenlandabschnitt (10) zwischen der ersten Kronenumfangsrille (7) und der zweiten Kronenumfangsrille (8) umfassen,
der erste mittlere Landabschnitt (11) mit ersten mittleren Querrillen (16) versehen ist, die sich über eine gesamte axiale Breite davon erstrecken,
der zweite mittlere Landabschnitt (12) mit zweiten mittleren Querrillen (17) versehen ist, die sich über eine gesamte axiale Breite davon erstrecken, und
jede der ersten mittleren Querrillen (16) und der zweiten mittleren Querrillen (17) in Bezug auf die Reifenaxialrichtung so geneigt ist, dass sie ein erstes Ende (16a, 17a) auf einer ersten Seite (S1) in der Reifenumfangsrichtung und ein zweites Ende (16b, 17b) auf einer zweiten Seite (S2) in der Reifenumfangsrichtung aufweist,
**dadurch gekennzeichnet, dass**
in einer Draufsicht des Laufflächenabschnitts (2) die ersten Enden (16a) der ersten mittleren Querrillen (16) jeweils erste virtuelle Zonen (21) überlappen, die durch Verlängern der zweiten Enden (17b) der zweiten mittleren Querrille (17) zu dem ersten mittleren Landabschnitt (11) parallel zu der Reifenaxialrichtung gebildet sind, und die zweiten Enden (16b) der ersten mittleren Querrillen (16) jeweils zweite virtuelle Zonen (22) überlappen, die durch Verlängern der ersten Enden (17a) der zweiten mittleren Querrillen (17) zu dem ersten mittleren Landabschnitt (11) parallel zu der Reifenaxialrichtung gebildet sind,
der Kronenlandabschnitt (10) mit einer Vielzahl von ersten Kronenquerrillen (31) versehen ist, die mit der ersten Kronenumfangsrille (7) verbunden sind, und
in einer Draufsicht des Laufflächenabschnitts (2) dritte virtuelle Zonen (23), die durch Verlängern der ersten Kronenquerrillen (31) zu dem ersten mittleren Landabschnitt (11) parallel zu der Reifenaxialrichtung gebildet sind, nicht die den ersten virtuellen Zonen (21) und die zweiten virtuellen Zonen (22) überlappen.

2. Reifen (1) nach Anspruch 1, wobei die ersten mittleren Querrillen (16) und die zweiten mittleren Querrillen (17) jeweils in einem Winkel (θ2) von 20 bis 60 Grad in Bezug auf die Reifenaxialrichtung geneigt sind.

3. Reifen (1) nach Anspruch 1 oder 2, wobei die Überlappungslänge (L4) in der Reifenumfangsrichtung des ersten Endes (16a) der ersten mittleren Querrille (16) mit der ersten virtuellen Zone (21) 30 % bis 100 % der Länge (L3) in der Reifenumfangsrichtung der ersten virtuellen Zone (21) beträgt.

4. Reifen (1) nach Anspruch 1, 2 oder 3, wobei die Überlappungslänge (L6) in der Reifenumfangsrichtung des zweiten Endes (16b) der ersten mittleren Querrille (16) mit der zweiten virtuellen Zone (22) 30 % bis 100 % der Länge (L5) in der Reifenumfangsrichtung der zweiten virtuellen Zone (22) beträgt.

5. Reifen (1) nach einem der Ansprüche 1 bis 4, wobei ein Abstand (L1) in der Reifenaxialrichtung von dem Reifenäquator (C) zu der Mittellinie der ersten Kronenumfangsrille (7) 5 % bis 20 % einer Laufflächenhalbbreite (TWh) beträgt, die der Abstand in der Reifenaxialrichtung von dem Reifenäquator (C) zu der ersten Laufflächenkante (T1) ist.

6. Reifen (1) nach einem der Ansprüche 1 bis 5, wobei ein Abstand in der Reifenaxialrichtung von dem Reifenäquator (C) zu der Mittellinie der zweiten Kronenumfangsrille (8) 5 % bis 20 % einer halben Laufflächenbreite (TWh) beträgt, die der Abstand in der Reifenaxialrichtung von dem Reifenäquator (C) zu der ersten Laufflächenkante (T1) ist.

7. Reifen (1) nach einem der Ansprüche 1 bis 6, wobei die Rillenbreite (W2) der ersten mittleren Querrille (16) 5 % bis 20 % eines Durchschnittswerts von Teilungslängen (P1) in der Reifenumfangsrichtung der ersten mittleren Querrillen (16) beträgt.

8. Reifen (1) nach einem der Ansprüche 1 bis 7, wobei die Rillenbreite (W3) der zweiten mittleren Querrille (17) 5 % bis 20 % eines Durchschnittswerts von Teilungslängen (P2) in der Reifenumfangsrichtung der zweiten mittleren Querrillen (17) beträgt.

9. Reifen (1) nach einem der Ansprüche 1 bis 8, wobei ein Landverhältnis des Kronenlandabschnitts (10) 80 % bis 95 % beträgt.

10. Reifen (1) nach einem der Ansprüche 1 bis 9, wobei die erste Kronenumfangsrille (7) und die zweite Kronenumfangsrille (8) sich jeweils in einer Zickzackform in der Reifenumfangsrichtung erstrecken.

11. Reifen (1) nach Anspruch 10, wobei
die erste Kronenumfangsrille (7) eine Zickzackform aufweist und umfasst:
axial innere Rillensegmente, die sich gerade in der Reifenumfangsrichtung erstrecken;
axial äußere Rillensegmente (7o), die sich gerade in der Reifenumfangsrichtung erstrecken; und
schräge Rillensegmente (7s), die die axial inneren Rillensegmente und die axial äußeren Rillensegmente (7o) miteinander verbinden, und
jede der ersten mittleren Querrillen (16) mit einer von Verbindungspositionen zwischen den axial äußeren Rillensegmenten (7o) und den schrägen Rillensegmenten (7s) der ersten Kronenumfangsrille (7) verbunden ist, so dass ein Winkel, der zwischen der ersten mittleren Querrille (16) und dem axial äußeren Rillensegment (7o) gebildet ist, ein stumpfer Winkel ist.

12. Reifen (1) nach Anspruch 10 oder 11, wobei
die zweite Kronenumfangsrille (8) eine Zickzackform aufweist und umfasst:
axial innere Rillensegmente, die sich gerade in der Reifenumfangsrichtung erstrecken;
axial äußere Rillensegmente (8o), die sich gerade in der Reifenumfangsrichtung erstrecken; und
schräge Rillensegmente (8s), die die axial inneren Rillensegmente und die axial äußeren Rillensegmente (8o) miteinander verbinden, und
jede der zweiten mittleren Querrillen (17) mit einem von Verbindungsabschnitten zwischen den axial äußeren Rillensegmenten (8o) und den schrägen Rillensegmenten (8s) der zweiten Kronenumfangsrille (8) verbunden ist, so dass ein Winkel, der zwischen der zweiten mittleren Querrille (17) und dem axial äußeren Rillensegment (8o) gebildet ist, ein stumpfer Winkel ist.

13. Reifen (1) nach einem der Ansprüche 1 bis 12, wobei
der Kronenlandabschnitt (10) mit einer Vielzahl von zweiten Kronenquerrillen (32) versehen ist, die mit der zweiten Kronenumfangsrille (8) verbunden sind, und
in einer Draufsicht des Laufflächenabschnitts (2) vierte virtuelle Zonen (24), die durch Verlängern der zweiten Kronenquerrillen (32) zu dem ersten mittleren Landabschnitt (11) parallel zu der Reifenaxialrichtung gebildet sind, nicht die ersten virtuellen Zonen (21) und die zweiten virtuellen Zonen (22) überlappen.

## Revendications

1. Pneumatique (1), comprenant :
une bande de roulement (2) ayant un premier bord de bande de roulement (T1) et un deuxième bord de bande de roulement (T2), et pourvue de quatre rainures circonférentielles (3) disposées entre le premier et le deuxième bord de bande de roulement et s'étendant de manière continue dans une direction circonférentielle du pneumatique, de sorte que la bande de roulement (2) est divisée axialement en cinq portions en relief (4), dans lequel
les quatre rainures circonférentielles (3) sont
une première rainure circonférentielle d'épaule (5) la plus proche du premier bord de bande de roulement (T1),
une deuxième rainure circonférentielle d'épaule (6) la plus proche du deuxième bord de bande de roulement (T2),
une première rainure circonférentielle de couronne (7) entre la première rainure circonférentielle d'épaule (5) et un équateur du pneumatique (C), et une deuxième rainure circonférentielle de couronne (8) entre la deuxième rainure circonférentielle d'épaule (6) et l'équateur du pneumatique (C),
les cinq portions en relief (4) comprennent
une première portion en relief médiane (11) entre la première rainure circonférentielle d'épaule (5) et la première rainure circonférentielle de couronne (7),
une deuxième portion en relief médiane (12) entre la deuxième rainure circonférentielle d'épaule (6) et la deuxième rainure circonférentielle de couronne (8), et
une portion en relief de couronne (10) entre la première rainure circonférentielle de couronne (7) et la deuxième rainure circonférentielle de couronne (8),
la première portion en relief médiane (11) est pourvu de premières rainures transversales médianes (16) s'étendant sur toute une largeur axiale de celle-ci,
la deuxième portion en relief médiane (12) est pourvu de deuxièmes rainures transversales médianes (17) s'étendant sur toute une largeur axiale de celle-ci, et
chacune des premières rainures transversales médianes (16) et des deuxièmes rainures transversales médianes (17) est inclinée par rapport à la direction axiale du pneumatique de manière à avoir une première extrémité (16a, 17a) sur un premier côté (S1) dans la direction circonférentielle du pneumatique et une deuxième extrémité (16b, 17b) sur un deuxième côté (S2) dans la direction circonférentielle du pneumatique,
**caractérisé en ce que**,
dans une vue en plan de la bande de roulement (2), les premières extrémités (16a) des premières rainures transversales médianes (16) chevauchent respectivement des premières zones virtuelles (21) formées par prolongement des deuxièmes extrémités (17b) de la deuxième rainure transversale médiane (17) jusqu'à la première portion en relief médiane (11) parallèlement à la direction axiale du pneumatique, et les deuxièmes extrémités (16b) des premières rainures transversales médianes (16) chevauchent respectivement des deuxièmes zones virtuelles (22) formées par prolongement des premières extrémités (17a) des deuxièmes rainures transversales médianes (17) jusqu'à la première portion en relief médiane (11) parallèlement à la direction axiale du pneumatique,
la portion en relief de couronne (10) est pourvu d'une pluralité de premières rainures transversales de couronne (31) reliées à la première rainure circonférentielle de couronne (7), et,
dans une vue en plan de la bande de roulement (2), des troisièmes zones virtuelles (23) formées par prolongement des premières rainures transversales de couronne (31) jusqu'à la première portion en relief médiane (11) parallèlement à la direction axiale du pneumatique ne chevauchent pas les premières zones virtuelles (21) et les deuxièmes zones virtuelles (22).

2. Pneumatique (1) selon la revendication 1, dans lequel les premières rainures transversales médianes (16) et les deuxièmes rainures transversales médianes (17) sont chacune inclinées d'un angle (θ2) de 20 à 60 degrés par rapport à la direction axiale du pneumatique.

3. Pneumatique (1) selon la revendication 1 ou 2, dans lequel la longueur de chevauchement (L4) dans la direction circonférentielle du pneumatique de la première extrémité (16a) de la première rainure transversale médiane (16) avec la première zone virtuelle (21) est de 30 % à 100 % de la longueur (L3) dans la direction circonférentielle du pneumatique de la première zone virtuelle (21).

4. Pneumatique (1) selon la revendication 1, 2 ou 3, dans lequel la longueur de chevauchement (L6) dans la direction circonférentielle du pneumatique de la deuxième extrémité (16b) de la première rainure transversale médiane (16) avec la deuxième zone virtuelle (22) est de 30 % à 100 % de la longueur (L5) dans la direction circonférentielle du pneumatique de la deuxième zone virtuelle (22).

5. Pneumatique (1) selon l'une quelconque des revendications 1 à 4, dans lequel une distance (L1) dans la direction axiale du pneumatique de l'équateur du pneumatique (C) à la ligne médiane de la première rainure circonférentielle de couronne (7) est de 5 % à 20 % d'une demi-largeur de bande de roulement (TWh) qui est la distance dans la direction axiale du pneumatique de l'équateur du pneumatique (C) au premier bord de bande de roulement (T1).

6. Pneumatique (1) selon l'une quelconque des revendications 1 à 5, dans lequel une distance dans la direction axiale du pneumatique de l'équateur du pneumatique (C) à la ligne médiane de la deuxième rainure circonférentielle de couronne (8) est de 5 % à 20 % d'une demi-largeur de bande de roulement (TWh) qui est la distance dans la direction axiale du pneumatique de l'équateur du pneumatique (C) au premier bord de bande de roulement (T1).

7. Pneumatique (1) selon l'une quelconque des revendications 1 à 6, dans lequel la largeur de rainure (W2) de la première rainure transversale médiane (16) est de 5 % à 20 % d'une valeur moyenne de longueurs de pas (P1) dans la direction circonférentielle du pneumatique des premières rainures transversales médianes (16).

8. Pneumatique (1) selon l'une quelconque des revendications 1 à 7, dans lequel la largeur de rainure (W3) de la deuxième rainure transversale médiane (17) est de 5 % à 20 % d'une valeur moyenne de longueurs de pas (P2) dans la direction circonférentielle du pneumatique des deuxièmes rainures transversales médianes (17).

9. Pneumatique (1) selon l'une quelconque des revendications 1 à 8, dans lequel un rapport de relief de la portion en relief de couronne (10) est de 80 % à 95 %.

10. Pneumatique (1) selon l'une quelconque des revendications 1 à 9, dans lequel la première rainure circonférentielle de couronne (7) et la deuxième rainure circonférentielle de couronne (8) s'étendent chacune selon une forme en zigzag dans la direction circonférentielle du pneumatique.

11. Pneumatique (1) selon la revendication 10, dans lequel
a première rainure circonférentielle de couronne (7) a une forme en zigzag et comprend :
des segments de rainure axialement internes s'étendant linéairement dans la direction circonférentielle du pneumatique ;
des segments de rainure axialement externes (7o) s'étendant linéairement dans la direction circonférentielle du pneumatique ; et
des segments de rainure obliques (7s) reliant les segments de rainure axialement internes et les segments de rainure axialement externes (7o), et
chacune des premières rainures transversales médianes (16) est reliée à l'une de positions de raccordement entre les segments de rainure axialement externes (7o) et les segments de rainure obliques (7s) de la première rainure circonférentielle de couronne (7), de sorte qu'un angle formé entre la première rainure transversale médiane (16) et le segment de rainure axialement externe (7o) est un angle obtus.

12. Pneumatique (1) selon la revendication 10 ou 11, dans lequel
la deuxième rainure circonférentielle de couronne (8) a une forme en zigzag et comprend :
des segments de rainure axialement internes s'étendant linéairement dans la direction circonférentielle du pneumatique ;
des segments de rainure axialement externes (8o) s'étendant linéairement dans la direction circonférentielle du pneumatique ; et
des segments de rainure obliques (8s) reliant les segments de rainure axialement internes et les segments de rainure axialement externes (8o), et
chacune des deuxièmes rainures transversales médianes (17) est reliée à l'une de portions de raccordement entre les segments de rainure axialement externes (8o) et les segments de rainure obliques (8s) de la deuxième rainure circonférentielle de couronne (8), de sorte qu'un angle formé entre la deuxième rainure transversale médiane (17) et le segment de rainure axialement externe (8o) est un angle obtus.

13. Pneumatique (1) selon l'une quelconque des revendications 1 à 12, dans lequel
le portion en relief de couronne (10) est pourvu d'une pluralité de deuxièmes rainures transversales de couronne (32) reliées à la deuxième rainure circonférentielle de couronne (8), et,
dans une vue en plan de la bande de roulement (2), des quatrièmes zones virtuelles (24) formées par prolongement des deuxièmes rainures transversales de couronne (32) jusqu'à la première portion en relief médiane (11) parallèlement à la direction axiale du pneumatique ne chevauchent pas les premières zones virtuelles (21) et les deuxièmes zones virtuelles (22).
